# EUROPÄISCHE PATENTSCHRIFT

(11) **EP 1 053 901 B1**
(45) Veröffentlichungstag und Bekanntmachung des Hinweises auf die Patenterteilung: **28.09.2005**
(21) Anmeldenummer: 00106381.7
(22) Anmeldetag: 24.03.2000
(51) Int. Cl.: B60K 11/04

(54) **Kühler für Brennkraftmaschinen**
Radiator for internal combustion engine
Radiateur pour moteur à combustion interne

(30) Priorität: 20.05.1999 DE 19923098
(43) Veröffentlichungstag der Anmeldung: 22.11.2000
(73) Patentinhaber: Dr.Ing. h.c.F. Porsche Aktiengesellschaft, 70435 Stuttgart (DE)
(72) Erfinder: Weigele, Hans, 70436 Stuttgart (DE); Zaremba, Dieter, 75417 Mühlacker (DE)

(56) Entgegenhaltungen:
- DE-A- 3 930 076
- GB-A- 279 105
- US-A- 5 460 420

## Beschreibung

Die Erfindung bezieht sich auf einen Kühler für Brennkraftmaschinen oder Aggregate davon nach dem Oberbegriff des Patentanspruchs 1.

Ein bekannter Kühler, DE 39 30076 C1, der eingangs genannten Gattung, ist in den Bug eines Kraftfahrzeugs eingebaut und weist eine rechteckige Grundform auf, wobei an aufrechten Seiten des Kühlers Kästen vorgesehen sind. Über diese Kästen wird dem Kühler erwärmtes Medium zugeführt bzw. in ihm gekühltes Medium abgeführt. Obwohl anzunehmen ist, daß der Kühler eine definierte Kühlwirkung aufweist, erschwert seine Grundform, weil rechteckig, die eingepaßte Unterbringung in einen Raum des Kraffahrzeug-Bugs, der von im Winkel zueinander verlaufenden Außenwandungen umgeben ist, zwischen denen ein relativ großer Bogen verläuft.

Aufgabe der Erfindung ist es daher, einen Kühler so zu gestalten, daß er bei guter Kühlfunktion sich auf vorteilhafte Weise in eine gegebene Außenwandungen umfassende Aufbaustruktur eines Kraftfahrzeugs integrieren läßt.

Erfindungsgemäß wir diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß der Kühler auf der den Außenwandungen eines Kraftfahrzeug-Aufbaus zugekehrten Seiten solche Außenkonturen aufweist, die an besagte Außenwandungen bspw. einer vorgegebenen Karosserieform-Konzeption angepaßt sind, was zur guten Raumausnutzung beiträgt. Dadurch besteht aber auch die Möglichkeit eine Zuführungsleitung des Kühlers gekrümmt auszuführen und die durchströmte Fläche des Kühlers entsprechend zu dimensionieren. In gleicher Art kann auch die Austrittsleitung des Kühlers gestaltet sein, wenn die benachbarte Außenwandung dies erforderlich macht. Daß die Zuführungsleitung und die Austrittsleitung an der Oberseite bzw. an der Unterseite des Kühlerkörpers vorgesehen ist, ermöglicht eine einfache Verbindung mit entsprechenden Anschlußleitungen, die zwischen Brennkraftmaschine und Kühler zu verlegen sind.

In der Zeichnung wird ein Ausführungsbeispiel der Erfindung gezeigt, das nachstehend näher beschrieben ist.

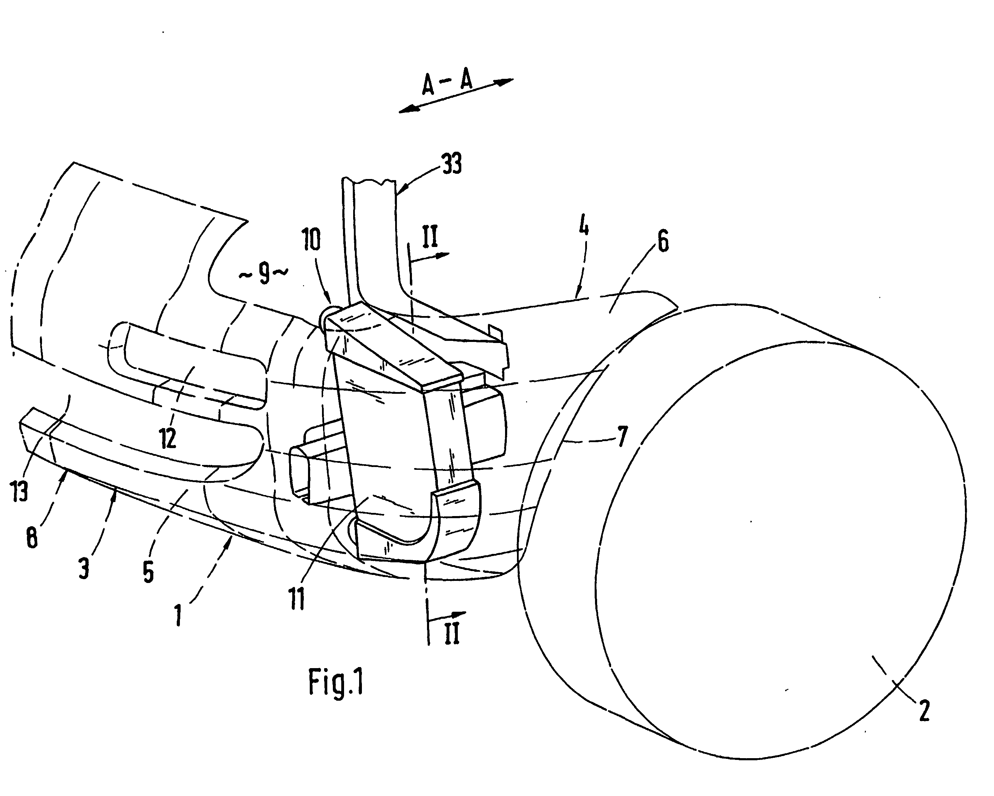

Es zeigen
- Fig.1: eine Schrägansicht von vorne rechts auf einen Personenwagen mit dem Kühler nach der Erfindung;
- Fig. 2: einen Schnitt nach der Linie II-II der Fig.1.

Ein Personenkraftwagen 1 umfaßt in dem dargestellten Bereich ein Rad 2 und einen Bug 3 eines Aufbaus 4. Der Bug 3 wird durch Außenhautabschnitte 5, 6 definiert, die Bestandteil eines sich zwischen Radausschnitten 7 erstreckenden Bugendteils 8 sind. In einen durch die Außenhautabschnitte 5, 6 begrenzten Raum 9 des Bugs 3 - in Fahrtrichtung vor dem Rad 2 - ist ein Kühler 10 mit einem etwa rechteckigen Querschnitt eingebaut, dessen längere Seiten 11 quer zur Fahrzeuglängsrichtung A-A verlaufen. Jedoch ist der Kühler 10, der ein den Ladungseinsatz einer nicht gezeigten Brennkraftmaschine optimierender Ladeluftkühler ist, im wesentlichen senkrecht eingesetzt. Im Außenhautabschnitt 5 sind Lufteinläße 12, 13, unter anderem für den Kühler 10, vorgesehen.

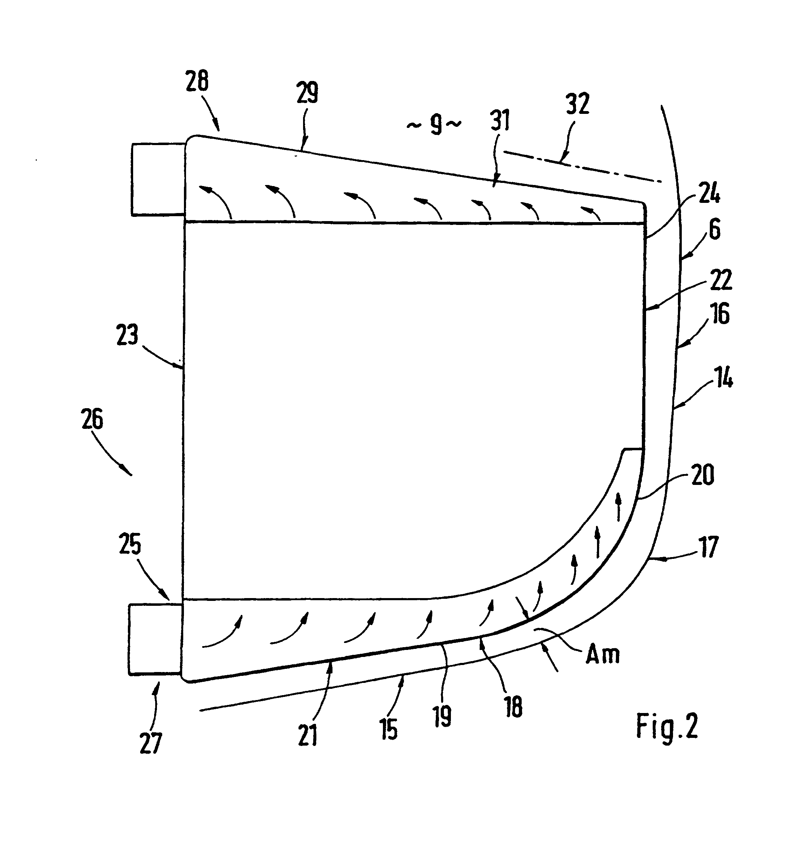

Gemäß Fig. 2 weist der Außenhautabschnitt 6 eine Außenwandung 14 auf, die einen ersten quer zur Fahrzeuglängsmittelebene - nicht gezeigt - hin verlaufenden Formabschnitt 15 und einen zweiten aufrechten Formabschnitt 16 aufweist. Die Formabschnitte 15, 16 sind bombiert oder konvex ausgeführt. Zwischen dem ersten Formabschnitt 15 und dem zweiten Formabschnitt 16, die im Winkel zueinander verlaufen, ist ein dritter Formabschnitt 17 vorgesehen, der als Rundung ausgeführt ist. An die Formabschnitte 15, 16, 17 ist eine Außenkontur 18 des Kühlers 10 angepaßt, und zwar von der Innenseite des Raumes 9 aus. Dabei ist ein etwa konstantes Abstandsmaß Am zwischen den Formabschnitten 15, 16, 17 und der Außenkontur 18 relativ klein, wodurch der Kühler 10 nahe an den Außenhautabschnitt 6 herangeführt ist.

Die Außenkontur 18 umfaßt einen ersten Außenkonturabschnitt 19 und einen zweiten Außenkonturabschnitt 20, die die Außenseite einer Zuführungsleitung 21 des Kühlers 10 bilden und entlang des ersten Formabschnitts 15 sowie des dritten Formabschnitts 17 verlaufen. Die Zuführungsleitung 21, die durch diese Ausbildung gekrümmt ist, begrenzt einen aufrechte Seitenwandungen 22, 23 besitzenden Kühlerkörper 24 an einer Unterseite 25. Die Zuführungsleitung 21 ist auf der dem Formabschnitt 16 abgekehrten Seite 26 mit einem Anschlußstutzen 27 versehen, über den von einem nicht dargestellten Turbolader Luft in die Zuführungsleitung 21 und den Kühlerkörper 24 gelangt.

Der Kühlerkörper 24 weist auf einer von der Zuführungsleitung 21 entfernt liegenden Seite 28 eine Austrittsleitung 29 auf, die ebenfalls den Kühlerkörper 24 begrenzt und auf der Seite 26 einen Anschlußstutzen 30 umfaßt, durch den gekühlte Luft zu einer nicht gezeigten Ansauganlage der Brennkraftmaschine geleitet wird. Ein Außenkonturabschnitt 31 der Austrittsleitung 29 ist an einen mit strichpunktierter Linie dargestellten vierten Formabschnitt 32 der Außenwandung 12 angepaßt, und zwar ähnlich wie die Außenkontur 18 an die entsprechenden Formabschnitte.

Schließlich ist der Kühler 10 mit geeigneten Mitteln an einer vorhandenen Trägerstruktur 33 des Aufbaus 4 befestigt.

## Patentansprüche

1. Kühler für Brennkraftmaschinen oder Aggregate davon, eingebaut in einen Endbereich eines Aufbaus eines Personenkraftwagens, der einen von einer seitlichen Außenwandung begrenzten Raum aufweist, welcher Raum zur Aufnahme des Kühlers ausgebildet ist, **dadurch gekennzeichnet, dass** die seitliche Außenwandung (14) des Raums bombierte, im Winkel zueinander verlaufende Formabschnitte (15, 16, 17) aufweist, an die eine seitliche Außenkontur (18) des im wesentlichen quer zur Fahrzeuglängsrichtung (A - A) in den Aufbau (4) eingesetzten Kühlers (10) bereichsweise angepasst ist.

2. Kühler nach Anspruch 1, **dadurch gekennzeichnet, daß** die Formabschnitte (15, 16, 17) im Querschnitt des Aufbaus (4) gesehen einen ersten quer verlaufenden Formabschnitt (15), einen zweiten aufrecht verlaufenden Formabschnitt (16) und einen dritten als Rundung zwischen dem ersten Formabschnitt (15) und dem zweiten Formabschnitt (16) ausgebildeten Formabschnitt umfassen (17), wobei die Außenkontur (18) des Kühlers (11) relativ nahe an die Innenseite der Formabschnitte (15, 16, 17) herangeführt ist.

3. Kühler nach den Ansprüchen 1 und 2, **dadurch gekennzeichnet, daß** eine Zuführungsleitung (21) des Kühlers (10) mit einem ersten Außenkonturabschnitt (19) und einem zweiten Außenkonturabschnitt (20) entlang des ersten Formabschnitts (15) bzw. des dritten Formabschnitt (17) verläuft.

4. Kühler nach einem oder mehreren der vorangehenden Ansprüche, **dadurch gekennzeichnet, daß** die Zuführungsleitung (21) einen Kühlerkörper (24) begrenzt, der beabstandete, aufrechte Seitenwandungen (22, 23) aufweist und auf der der Zuführungsleitung (21) abgekehrten Seite mit einer Austrittsleitung (29) verbunden ist.

5. Kühler nach einem oder mehreren der vorangehenden Ansprüche, **dadurch gekennzeichnet, daß** die Austrittsleitung (29) des Kühlers (10) einen Außenkonturabschnitt (31) aufweist, der an einen vierten Formabschnitt (32) der Außenwandung (14) angepaßt ist.

6. Kühler nach einem oder mehreren der vorangehenden Ansprüche, **dadurch gekennzeichnet, daß** die Zuführungsleitung (21) und die Austrittsleitung (29) Anschlußstutzen (27 und 30) aufweisen, die auf der dem zweiten Formabschnitt (16) abgekehrten Seite des Kühlers (10) vorgesehen sind.

7. Kühler nach einem oder mehreren der vorangehenden Ansprüche **dadurch gekennzeichnet, daß** der Kühler (10) in Fahrtrichtung (B) gesehen vor einem Rad (2) des Personenkraftwagens (1) in den Bug (3) integriert ist.

8. Kühler nach einem oder mehreren der vorangehenden Ansprüche, **dadurch gekennzeichnet, daß** der Kühler (10) an einer Tägerstruktur (31) des Aufbaus (2) in Lage gehalten wird.

9. Kühler nach einem oder mehreren der vorangehenden Ansprüche, **dadurch gekennzeichnet, daß** der Kühler (10) ein Ladeluftkühler ist.

## Claims

1. A radiator for internal-combustion engines or assemblies thereof, installed in an end region of a body of a passenger vehicle, the end region having a space which is bounded by a lateral outer wall and which is formed for accommodating the radiator, **characterised in that** the lateral outer wall (14) of the space has curved shaped portions (15, 16, 17) which extend at an angle to one another and to which a lateral outer contour (18) of the radiator (10), which is inserted into the body (4) substantially transversely to the vehicle longitudinal direction (A-A), is adapted in part.

2. A radiator according to claim 1, **characterised in that** the shaped portions (15, 16, 17), seen in cross-section through the body (4), comprise a first, transversely extending shaped portion (15), a second, vertically extending shaped portion (16) and a third shaped portion (17) formed as a rounding between the first shaped portion (15) and the second shaped portion (16), wherein the outer contour (18) of the radiator (11) extends relatively closely to the inside of the shaped portions (15, 16, 17).

3. A radiator according to claims 1 and 2, **characterised in that** a feed pipe (21) of the radiator (10) has a first outer-contour portion (19) and a second outer-contour portion (20) extending along the first shaped portion (15) and the third shaped portion (17) respectively.

4. A radiator according to one or more of the preceding claims, **characterised in that** the feed pipe (21) bounds a radiator body (24) which has spaced, upright side walls (22, 23) and is connected to an outlet pipe (29) on the side remote from the feed pipe (21).

5. A radiator according to one or more of the preceding claims, **characterised in that** the outlet pipe (29) of the radiator (10) has an outer-contour portion (31) adapted to a fourth shaped portion (32) of the outer wall (14).

6. A radiator according to one or more of the preceding claims, **characterised in that** the feed pipe (21) and the outlet pipe (29) have connecting pieces (27 and 30) provided on the side of the radiator (10) remote from the second shaped portion (16).

7. A radiator according to one or more of the preceding claims, **characterised in that** the radiator (10), seen in the direction of travel (B), is integrated into the forward structure (3) in front of a wheel (2) of the passenger vehicle (1).

8. A radiator according to one or more of the preceding claims, **characterised in that** the radiator (10) is held in position on a supporting structure (31) [*sic* - 33] of the body (2) [*sic* - 4].

9. A radiator according to one or more of the preceding claims, **characterised in that** the radiator (10) is a charge-air cooler.

## Revendications

1. Radiateur pour moteurs à combustion interne ou groupes de ceux-ci, monté dans une zone terminale de la carrosserie d'une voiture de tourisme, qui présente un volume limité par une paroi extérieure latérale, lequel volume est conçu pour recevoir le radiateur, **caractérisé en ce que** la paroi extérieure latérale (14) du volume présente des sections façonnées (15, 16, 17) bombées, s'étendant en formant un angle entre elles, auxquelles est adapté par endroits un contour extérieur latéral (18) du radiateur (10) inséré dans la carrosserie (14), sensiblement transversalement à la direction longitudinale (A-A) du véhicule.

2. Radiateur selon la revendication 1, **caractérisé en ce que** les sections façonnées (15, 16, 17), vues dans la section transversale de la carrosserie (14), comprennent une première section façonnée (15) s'étendant transversalement, une deuxième section façonnée (16) s'étendant verticalement et une troisième section façonnée (17), réalisée comme un arrondi entre la première section façonnée (15) et la deuxième section façonnée (16), le contour extérieur (18) du radiateur (11) s'approchant relativement près de la face intérieure des sections façonnées (15, 16, 17).

3. Radiateur selon les revendications 1 et 2, **caractérisé en ce qu'**une conduite d'amenée (21) du radiateur (10) s'étend par une première section de contour extérieur (19) et une deuxième section de contour extérieur (20), le long de la première section façonnée (15) ou de la troisième section façonnée (17).

4. Radiateur selon une ou plusieurs des revendications précédentes, **caractérisé en ce que** la conduite d'amenée (21) délimite un corps de radiateur (24) qui comporte des parois latérales (22, 23) verticales, espacées, et est relié, sur le côté tourné à l'opposé de la conduite d'amenée (21), à une conduite de sortie (29).

5. Radiateur selon une ou plusieurs des revendications précédentes, **caractérisé en ce que** la conduite de sortie (29) du radiateur (10) présente une section de contour extérieur (31) qui est adaptée à une quatrième section façonnée (32) de la paroi extérieure (14).

6. Radiateur selon une ou plusieurs des revendications précédentes, **caractérisé en ce que** la conduite d'amenée (21) et la conduite de sortie (29) comportent des tubulures de raccordement (respectivement 27 et 30) qui sont prévues sur le côté du radiateur (10), tourné à l'opposé de la deuxième section façonnée (16).

7. Radiateur selon une ou plusieurs des revendications précédentes, **caractérisé en ce que** le radiateur (10), vu dans le sens de marche (B), est intégré à l'avant (3), devant une roue (2) de la voiture de tourisme (1).

8. Radiateur selon une ou plusieurs des revendications précédentes, **caractérisé en ce que** le radiateur (10) est maintenu en position sur une structure portante (31) de la carrosserie (2).

9. Radiateur selon une ou plusieurs des revendications précédentes, **caractérisé en ce que** le radiateur (10) est un radiateur à air de charge.
